Europäisches Patentamt

European Patent Office

Office européen des brevets

(19)

(11) Numéro de publication : **0 513 306 B1**

# (12) FASCICULE DE BREVET EUROPEEN

(45) Date de publication du fascicule du brevet :
26.01.94 Bulletin 94/04

(51) Int. Cl.$^5$ : **C02F 1/52,** C02F 1/58

(21) Numéro de dépôt : **92900614.6**

(22) Date de dépôt : **25.11.91**

(86) Numéro de dépôt international :
**PCT/FR91/00932**

(87) Numéro de publication internationale :
**WO 92/09531 11.06.92 Gazette 92/13**

(54) **PROCEDE D'ELIMINATION DE L'AMMONIAQUE DES EAUX RESIDUAIRES.**

(30) Priorité : **26.11.90 FR 9014748**

(43) Date de publication de la demande :
**19.11.92 Bulletin 92/47**

(45) Mention de la délivrance du brevet :
**26.01.94 Bulletin 94/04**

(84) Etats contractants désignés :
**AT BE CH DE DK ES FR GB GR IT LI LU NL SE**

(56) Documents cités :
**EP-A- 0 335 280**
**DE-A- 3 732 896**
**DE-A- 3 833 039**

(73) Titulaire : **SOCIETE NATIONALE ELF
AQUITAINE
Tour Elf, 2, Place de la Coupole, La Défense 6
F-92400 Courbevoie (FR)**

(72) Inventeur : **HORNY, Patrick
Place du Faubourg Saint-Germain
F-64190 Navarrenx (FR)**
Inventeur : **LADOUSSE, Alain, Les Hameaux
du Cadre-Noir
Bât. Deauville, 417, Camy-Salié
F-64000 Pau (FR)**

(74) Mandataire : **Boillot, Marc
SOCIETE NATIONALE ELF AQUITAINE
(PRODUCTION) Dept. Propriété Industrielle
Tour Elf
F-92078 Paris la Défense Cédex 45 (FR)**

EP 0 513 306 B1

Jouve, 18, rue Saint-Denis, 75001 PARIS

## Description

L'invention concerne un procédé d'élimination de l'ammoniaque des eaux résiduaires.

L'élimination de l'ammoniaque des eaux résiduaires est effectuée en général par traitement biologique. Les eaux fortement chargées en ammoniaque, contenant plus d'un gramme d'ammoniaque par litre sont léthales pour la biomasse. Pour effectuer le traitement biologique de ces eaux il est nécessaire de modifier le procédé et d'ajouter des étapes de nitrification et de dénitrification, ce qui induit des coûts supplémentaires élevés.

Il existe également des procédés physiques d'élimination de l'ammoniaque.

Le stripage de l'ammoniaque à l'air ou à la vapeur nécessite un investissement important, supportable pour des grosses installations uniquement.

L'échange ionique n'est concevable que pour des faibles concentrations. En fait, à cause des difficultés de traitement des éluats de régénération, le problème et simplement déplacé.

Les techniques membranaires, comme l'électrodialyse donnent de bons résultats mais laissent encore de nombreuses questions non résolues, concernant la durée de vie des membranes, les colmatages, etc... Le coût de ces techniques est également élevé.

La demande de brevet allemand DE-A-37 32 896 décrit un procédé chimique, basé sur la formation d'un sel faiblement soluble en milieux aqueux, le phosphate ammoniaco-magnésien, par addition successive d'un phosphate puis de magnésie aux eaux résiduaires. Ce procédé ne permet pas l'élimination complète de l'ammoniaque contenu dans les eaux résiduaires. Dans le but d'améliorer ce procédé, donc d'augmenter le taux d'élimination de l'ammoniaque, la demande de brevet européen EP-A-335280 du même inventeur, propose un procédé en trois étapes. Ce procédé consiste à intercaler entre les étapes d'addition de phosphate et d'addition de magnésie, un traitement acide. Ce procédé en trois étapes est plus complexe et donc coûteux et nécessite la manipulation de deux réactifs solides.

Nous avons trouvé maintenant un procédé d'élimination de l'ammoniaque en une seul étape, utilisant un seul réactif.

Un grand avantage de ce procédé est d'utiliser un réactif liquide dont la manipulation et le dosage sont aisés.

Un autre avantage de ce procédé, est un taux d'élimination de l'ammoniaque nettement supérieur à celui de l'art antérieur.

Une possibilité intéressante est de faire suivre le procédé selon l'invention par un traitement biologique, rendu possible par la diminution de la teneur en ammoniaque des eaux résiduaires traitées.

Enfin, il est très important de noter que le procédé permet l'élimination simultanée de l'ammoniaque et des phosphates des eaux résiduaires.

Le procédé d'élimination de l'azote ammoniacal contenu dans les eaux résiduaires, selon l'invention, consiste en la précipitation de l'azote ammoniacal sous forme d'un phosphate ammoniaco-magnésien, caractérisé par l'addition aux eaux résiduaires d'un réactif liquide unique renfermant des sources d'ions magnésium, d'ions phosphates et un acide.

Le phosphate ammoniaco-magnésien correspond à la formule $NH_4MgPO_4$. Il cristallise en général sous forme hexahydratée. Ce sel est très peu soluble dans l'eau, il est même utilisé en chimie analytique pour le dosage du magnésium ou de l'acide phosphorique.

Le réactif liquide unique renferme de préférence des quantités équimolaires d'ions magnésium et de phosphates. Ceci correspond à la stoechiométrie du phosphate ammoniaco-magnésien. Le rapport phosphate/magnésium peut cependant varier entre environ 0,5 à 1,5.

Si les eaux résiduaires contiennent à côté de l'ammoniaque également des ions phosphates, on en tient compte dans la formulation du réactif, pour obtenir la stoechiométrie désirée.

Le réactif renferme en général environ 0,8 à 2 moles d'ions magnésium et de phosphates par mole d'ion ammonium. On utilise en général un excès de magnésium et d'ion phosphate par rapport aux ions ammonium.

En général, un excès de 1,1 à 1,5 mole d'ions magnésium et de phosphates par mole d'ions ammonium est suffisant.

La source d'ions magnésium est en général l'oxyde de magnésium ou magnésie, MgO. Il est cependant possible d'utiliser des sels de magnésium, comme le chlorure ou le sulfate.

La source d'ions phosphates est en général l'acide phosphorique, $H_3PO_4$, mais des phosphates alcalins ou alcalino-terreux conviennent également.

Les acides sont des acides minéraux ou organiques forts, comme l'acide chlorhydrique, l'acide sulfurique, l'acide formique ou l'acide acétique. On utilise de préférence l'acide chlorhydrique. On utilise la quantité d'acide nécessaire pour l'obtention d'un pH compris entre environ 1 et 2.

Le réactif liquide unique est préparé par simple mélange des sources d'ions magnésium et de phosphate, l'acide fort et éventuellement de l'eau.

La teneur en azote ammoniacal des eaux résiduaires est déterminée par dosage chimique ou physique, puis on introduit le réactif renfermant entre 0,8 et 2 moles et de préférence entre 1,1 et 1,5 moles d'ions magnésium et de phosphates par rapport à la teneur en azote ammoniacal.

Avec un excès de réactifs d'environ 50%, le phosphate ammoniaco-magnésien précipite de façon pratiquement quantitative. En ajoutant le même excès d'ions magnésium et de phosphates, mais séparément, en deux étapes, on n'élimine que 90% de l'azote contenu dans les eaux.

Après ajout du réactif unique on ajuste le pH du milieu par une base. Le pH doit être supérieur à 7, de préférence supérieur à 9. Il est avantageusement compris entre 9 et 11.

Pour ajuster le pH on utilise une base inorganique, comme la soude, la potasse ou leurs mélanges. Il est également possible d'utiliser des bases récupérées d'opérations industrielles, comme des eaux sodées, sans purification préalable.

La formation de sel est exothermique, il est inutile de chauffer le milieu. Le sel précipite de façon instantanée. Il est séparé des eaux résiduaires par un procédé physique, comme la filtration, la centrifugation ou la décantation.

Le procédé peut fonctionner aussi bien en continu qu'en discontinu. En cas de fonctionnement en continu, l'analyseur d'azote qui mesure, en continu, la teneur en azote des eaux résiduaires actionne directement une microvanne d'arrivé du réactif unique. Le pH est ajusté dans le réacteur par addition d'une base, puis le sel est séparé, de préférence par décantation.

Le procédé selon l'invention permet le traitement de toutes les eaux résiduaires renfermant de l'azote sous forme d'ions ammonium. Il est particulièrement adapté au traitement des eaux résiduaires renfermant plus de 1g/l d'azote sous forme ammoniacale et au traitement des eaux renfermant des ions ammonium et ions phosphates.

Les eaux résiduaires peuvent être d'origine industrielle, agricole ou ménagère.

Les eaux résiduaires très chargées en ammoniaque, d'origine industrielle, proviennent d'industries utilisant des matières animales ou végétales ainsi que des industries chimiques manipulant des produits azotés. Il s'agit pour les premières industries agro-alimentaires telles que fabriques de pectine, de gélatine ou usines d'équarrissage. Parmi les industries chimiques, on peut citer la fabrication des engrais.

Les eaux résiduaires agricoles sont issues du secteur de l'élevage, les lisiers de porc étant l'exemple le plus connu.

Les exemples suivants illustrent l'invention sans toutefois la limiter

EXEMPLE 1

On prépare une solution de chlorure d'ammonium dans l'eau, renfermant 1g/l d'azote sous forme d'ions ammonium.

Le réactif est préparé à partir de 30g d'eau, 8,2g d'acide phosphorique, 3g de magnésie et 8,2g d'acide chlorhydrique. On obtient ainsi 50g d'un réactif contenant 75 mmol de magnésium et 75 mmol de phosphate.

Ce réactif est ajouté à la solution du chlorure d'ammonium et le pH est ajusté à 10 avec de la soude.

Le tableau 1 résume les rendements d'épuration en fonction de l'excès du réactif employé.

EXEMPLE 2 (Comparatif)

On prépare une solution de chlorure d'ammonium dans l'eau, renfermant 1g/l d'azote, identique à l'exemple 1. On ajoute des quantités variables de phosphate dipotassique puis des quantités équimoléculaires de sulfate de magnésium. Le pH est ajusté à 9,9 avec de la soude.

Le tableau 1 résume les rendements d'épuration en fonction de l'excès du réactif employé.

EXEMPLE 3

A une solution aqueuse de chlorure d'ammonium, identique aux exemples 1 et 2, on ajoute un réactif unique, contenant 40g d'eau, 18g de phosphate dipotassique, 13g de sulfate de magnésium et 4g d'acide chlorhydrique. On obtient ainsi un réactif contenant 75 mmol de magnésium et 75 mmol de phosphate. Ce réactif est ajouté à la solution ammoniacale et le pH est ajusté à 9,9 avec de la soude.

Le tableau 1 résume les rendements d'épuration en fonction de l'excès du réactif employé.

TABLEAU 1

| Excès molaire | R$^t$épuration % Exemple 1 | R$^t$épuration % Exemple 2 (comparatif) | R$^t$épuration % Exemple 3 |
|---|---|---|---|
| 0 % | 76 | 58 | 80 |
| 10 % | 85 | 66 | 82 |
| 25 % | 92 | 76 | 88 |
| 50 % | > 99 | 92 | 92 |

On obtient ainsi un réactif contenant 75 mmol de magnésium et 75 mmol de phosphate.

EXEMPLE 4 (comparatif)

On utilise la procédure de l'exemple comparatif 2 avec une eau provenant des buées de combustion d'un cuiseur de viande, contenant 1,8g/l d'azote sous forme ammoniacale.
Avec un excès de 80% de phosphate dipotassique et de sulfate de magnésium, le rendement de l'épuration est de 91%.

EXEMPLE 5

On utilise la procédure de l'exemple 1 sur une eau issue d'aérocondenseurs à 556 ppm d'azote sous forme ammoniacale par litre.
Avec un excès de réactif de 30% le rendement d'épuration est de 96%.

**Revendications**

1. Procédé d'élimination de l'azote ammoniacal contenu dans les eaux résiduaires par précipitation sous forme d'un phosphate ammoniaco-magnésien caractérisé par l'addition aux eaux résiduaires d'un réactif liquide unique renfermant des sources d'ions magnésium, d'ions phosphates et un acide.

2. Procédé selon la revendication 1 caractérisé en ce que le rapport des ions phosphates/magnésium du réactif varie de 0,5 à 1,5.

3. Procédé selon la revendication 2 caractérisé en ce que le rapport des ions phosphates/magnésium = 1/1.

4. Procédé selon la revendication 3 caractérisé en ce que le réactif renferme entre 0,8 et 2 moles de magnésium et de phosphate par mole d'azote ammoniacal des eaux résiduaires et de préférence entre 1,1 à 1,5 moles.

5. Procédé selon l'une des revendications 1 à 4 caractérisé en ce que la source d'ions magnésium est l'oxyde de magnésium, le sulfate de magnésium ou le chlorure de magnésium, de préférence l'oxyde de magnésium.

6. Procédé selon l'une des revendications 1 à 5 caractérisé en ce que la source d'ions phosphates est l'acide phosphorique ou les phosphates alcalins ou alcalino-terreux, de préférence l'acide phosphorique.

7. Procédé selon l'une des revendications 1 à 6 caractérisé en ce l'acide est un acide minéral ou organique fort, comme l'acide chlorhydrique, l'acide sulfurique, l'acide formique ou l'acide acétique, de préférence l'acide chlorhydrique.

8. Procédé selon l'une des revendications 1 à 7 caractérisé en ce qu'on utilise la quantité d'acide nécessaire pour l'obtention d'un pH compris entre 1 et 2.

4

9. Procédé selon l'une des revendications 1 à 8 caractérisé en ce que après l'ajout du réactif, le pH du milieu est ajusté à une valeur supérieure à 7 et de préférence supérieure à 9.

10. Procédé selon la revendication 9 caractérisé en ce que le pH est ajusté à une valeur comprise ente 9 et 11.

11. Procédé selon la revendication 9 ou 10 caractérisé en ce que le pH est ajusté par la potasse, la soude ou leurs mélanges.

12. Procédé selon la revendication 9 ou 10 caractérisé en ce que le pH est ajusté par des bases récupérées d'opérations industrielles, sans purification préalable.

13. Procédé selon l'une des revendications 1 à 12 caractérisé en ce que les eaux résiduaires renferment également des ions phosphates.

14. Procédé selon l'une des revendications 1 à 13 caractérisé en ce que les eaux résiduaires sont d'origine industrielle, agricole ou ménagère.

## Claims

1. Process of eliminating ammoniacal nitrogen contained in residual waters by means of precipitation in the form of an ammoniacal-magnesium phosphate characterised by the addition to the residual waters of a single liquid reagent containing sources of magnesium ions, phosphate ions and an acid.

2. Process according to Claim 1, characterised in that the ratio of phosphates/magnesium ions in the reactive mixture varies from 0.5 to 1.5.

3. Process according to Claim 2, characterised in that the phosphate/magnesium ion ratio = 1/1.

4. Process according to Claim 3, characterised in that the reagent contains between 0.8 and 2 mole and preferably between 1.1 and 1.5 mole of magnesium and of phosphate per mole of ammoniacal nitrogen of the residual waters.

5. Process according to any one of Claims 1 to 4, characterised in that the source of magnesium ions is magnesium oxide, magnesium sulphate or magnesium chloride, preferably magnesium oxide.

6. Process according to any one of Claims 1 to 5, characterised in that the source of phosphate ions is phosphoric acid or alkaline or alkaline earth phosphates, preferably phosphoric acid.

7. Process according to any one of Claims 1 to 6, characterised in that the acid is a mineral or strong organic acid, such as chlorhydric acid, sulphuric acid, formic acid or acetic acid, preferably chlorhydric acid.

8. Process according to any one of Claims 1 to 7, characterised in that the quantity of acid necessary to obtain a pH between 1 and 2 is used.

9. Process according to any one of Claims 1 to 8, characterised in that after the addition of the reagent, the pH of the mixture is adjusted to a value that is greater than 7 and preferably greater than 9.

10. Process according to Claim 9, characterised in that the pH is adjusted to a value of between 9 and 11.

11. Process according to Claim 9 or 10, characterised in that the pH is adjusted using potash, soda carbonate or mixtures thereof.

12. Process according to Claim 9 or Claim 10, characterised in that the pH is adjusted using bases recovered from industrial operations, without previous purification.

13. Process according to any one of Claims 1 to 12, characterised in that the residual waters likewise contain phosphate ions.

14. Process according to any one of Claims 1 to 13, characterised in that the residual waters are of industrial, agricultural, or household origin.

**Patentansprüche**

1. Verfahren zur Beseitigung von in Abwässern enthaltenem ammoniakhaltigem Stickstoff durch Ausfällen in Form eines Ammoniak-Magnesium-Phosphats, gekennzeichnet durch die Zugabe eines einzigen Flüssigreagens zu den Abwässern, das Magnesiumionen- und Phosphationenquellen sowie eine Säure umfaßt.

2. Verfahren nach Anspruch 1, dadurch gekennzeichnet, daß das Ionenverhältnis von Phosphat/Magnesium des Reagens zwischen 0,5 und 1,5 variiert.

3. Verfahren nach Anspruch 2, dadurch gekennzeichnet, daß das Ionenverhältnis von Phosphat/Magnesium gleich 1/1 ist.

4. Verfahren nach Anspruch 3, dadurch gekennzeichnet, daß das Reagens pro Mol des in den Abwässern enthaltenen ammoniakhaltigen Stickstoffs zwischen 0,8 und 2 Magnesium- und Phosphatmole, vorzugsweise zwischen 1,1 und 1,5 Mole, enthält.

5. Verfahren nach einem der Ansprüche 1 bis 4, dadurch gekennzeichnet, daß die Magnesiumionenquelle Magnesiumoxid, Magnesiumsulfat oder Magnesiumchlorid, vorzugsweise Magnesiumoxid, ist.

6. Verfahren nach einem der Ansprüche 1 bis 5, dadurch gekennzeichnet, daß die Phosphationenquelle aus Phosphorsäure, alkalischen oder erdalkalischen Phosphaten, vorzugsweise Phosphorsäure, besteht.

7. Verfahren nach einem der Ansprüche 1 bis 6, dadurch gekennzeichnet, daß die Säure eine Mineralsäure oder eine starke organische Säure wie Salz-, Schwefel-, Ameisen- oder Essigsäure, vorzugsweise Salzsäure, ist.

8. Verfahren nach einem der Ansprüche 1 bis 7, dadurch gekennzeichnet, daß man die zum Erhalt eines pH zwischen 1 und 2 notwendige Säurenmenge verwendet.

9. Verfahren nach einem der Ansprüche 1 bis 8, dadurch gekennzeichnet, daß man nach der Zugabe des Reagens den pH des Mediums auf einen Wert von höher als 7, vorzugsweise höher als 9, einstellt.

10. Verfahren nach Anspruch 9, dadurch gekennzeichnet, daß der pH auf einen Wert zwischen 9 und 11 eingestellt wird.

11. Verfahren nach Anspruch 9 oder 10, dadurch gekennzeichnet, daß der pH durch pottasch, soda oder deren Gemische eingestellt wird.

12. Verfahren nach Anspruch 9 oder 10, dadurch gekennzeichnet, daß der pH durch aus industriellen Verfahren zurückgewonnenen Basen ohne vorherige Reinigung eingestellt wird.

13. Verfahren nach einem der Ansprüche 1 bis 12, dadurch gekennzeichnet, daß die Abwässer gleichermaßen Phosphationen enthalten.

14. Verfahren nach einem der Ansprüche 1 bis 13, dadurch gekennzeichnet, daß die Abwässer ursprünglich aus der Industrie, der Landwirtschaft oder den Haushalten kommen.